# EUROPEAN PATENT APPLICATION

(11) **EP 1 329 788 A1**
(43) Date of publication of application: **23.07.2003**
(21) Application number: 02354015.6
(22) Date of filing: 22.01.2002
(51) Int. Cl.: G06F 1/00

(54) **A method of controlling access to a device and a method of identifying a user of an electronic device**

(71) Applicant: Hewlett Packard Company, a Delaware Corporation, Palo Alto, CA 94304 (US)
(72) Inventor: Brebner, Gavin, 38410 St. Martin D'Uriage (FR)
(74) Representative: Lloyd, Richard Graham

(57) **Abstract**

A method of controlling access to a device by the use of an access code comprising a sequence of signals, access to the device being denied when the relative lengths of the intervals between the starts of the signals of an entered input sequence do not tally with the relative lengths of the intervals between the starts of the signals of a stored sequence.

## Description

### Background to the Invention and Summary of the Prior Art

This invention relates to the general field of access control and user identification methods of the type used to control access, for example, to electronic devices such as Personal Digital Assistants (PDA's), portable (e.g. laptop) computers, smart cards and smart jewellery, and physical access control devices such as entrance locks.

WO99/09512 provides, in its introduction, a lucid summary of a number of identification systems which are used, alone or in various combinations, to allow or deny access to a variety of electronic data types and discloses the use of so-called "Inherent Security Characteristic" tests by which the identity of a user can be verified.

WO'512 also discloses, as do a number of other prior art teachings, the use of so-called keystroke analysis - a relatively complex and computationally demanding process by which a person's typing "traits" can be used to identify the user.

The approaches disclosed in WO'512, however, do not lend themselves readily to low cost security, authentication and access-control methods as it is clear (see, for example, lines 7 and 8 on page 7) that "standard computer hardware" such as a keyboard or mouse, is used to put the invention into practice.

It is an object of the present invention to provide improved access control and identification methods that can be used in conjunction with a number of different devices that overcome or at least mitigate this drawback, are simple to use, versatile and relatively cheap to put into practice.

### Summary of the Invention

In accordance with a first aspect of the present invention, there is provided a method of controlling access to a device by the use of an access code comprising a sequence of signals, access to the device being denied when the relative lengths of the intervals between the starts of the signals of an entered input sequence do not tally with the relative lengths of the intervals between the starts of the signals of a stored sequence.

A digital representation of the input sequence may be produced and the digital representation may be subjected to a processing operation such as smoothing, prior to the tally check being performed. The processing operation may involve the use of a de-bouncing algorithm.

The variation between input and stored relative lengths needed for access to be denied may be variable, whereby different levels of access control may be provided.

Thus, where a high level of access control (ie. high security) is required, very small differences between the input and stored relative lengths may be sufficient for a tally not to be found. On the other hand, where less security is needed, a greater variation may be permitted.

The stored sequence may be contained within a programmable non-volatile memory device, such as an EEPROM.

The stored sequence may be encrypted, encoded or otherwise disguised to prevent or at least hinder unauthorised access thereto.

In this way, the stored sequence may be changed by an authorised person such that a different access code may be chosen, in accordance with a user's preferences.

Preferably, the input sequence is entered using a single input element. The input element may be an electrically, optically or sonically operable switch.

In this way, the input sequence may be entered using a substantially single-finger operation: as will be appreciated, this not only facilitates entering of the input sequence but also allows simple - and hence cheap - switching circuitry to be employed.

Access to the device may be denied when the actual lengths of the intervals of an entered input sequence do not tally with the actual lengths of the intervals of a stored sequence. Thus, access to the device may be denied when the rhythm of the input sequence does not match the rhythm of the stored sequence.

In accordance with a second aspect of the present invention, there is provided a method of identifying a user of an electronic device by the use of an access code comprising a sequence of signals, the user being identified where a match is found between the relative or actual lengths of the intervals between the starts of the signals of an entered input sequence and the relative or actual lengths of the intervals between the starts of the signals of one of a plurality of stored user sequences.

The existence of a match may allow the thus-identified user to access user-specific functionality of the device.

In this way, not only is access to the device limited to authorised users, as stored user sequences will only exist in respect of such users, but the particular input sequence entered allows the specific authorised user to be identified, thus allowing user-specific functionality to be obtained.

Thus, where the method is used in conjunction with a company PDA or laptop, for example, different employees may be able to access different aspects of the PDA or laptop software, such as external network communications software.

The invention, in its second aspect, may comprise one or more of the features described in the preceding paragraphs.

In accordance with a third aspect of the present invention, there is provided a method of controlling access to a device by the use of an access code comprising a sequence of signals, access to the device being denied when the relative lengths of the intervals between signal-on and signal-off events of an entered input sequence do not tally with the relative lengths of the intervals between signal-on and signal-off events of a stored sequence.

The invention, in its third aspect, may comprise one or more of the features described in the preceding paragraphs.

In accordance with a fourth aspect of the present invention, there is provided a method of identifying a user of an electronic device by the use of an access code comprising a sequence of signals, the user being identified where a match is found between the relative or actual lengths of the intervals between signal-on and signal-off events of an entered input sequence and the relative or actual lengths of the intervals between signal-on and signal-off events of one of a plurality of stored user sequences.

The invention, in its fourth aspect, may comprise one or more of the features described in the preceding paragraphs.

### Brief Description of the Drawings

The invention will now be described in greater detail, but strictly by way of example only, by reference to the accompanying drawings, of which:
FIGURE 1 is a flow diagram showing the various steps involved in an implementation of the first aspect of the invention;
FIGURE 2 is a somewhat similar flow diagram showing the various steps involved in an implementation of the second aspect of the present invention;
FIGURE 3 shows a simple way in which a single input element can be used;
FIGURE 4A is a "raw" signal trace of the type that might be produced with such an input element;
FIGURE 4B is a smoothed version of the trace of FIGURE 4A, with the intervals between the various signals being shown;
FIGURE 5 is a tabular representation of input and stored values; and
FIGURE 6 is a similar trace to that shown in Figure 4B, but in which additional intervals are also shown.

### Detailed Description of the Drawings and Best Mode of the Invention

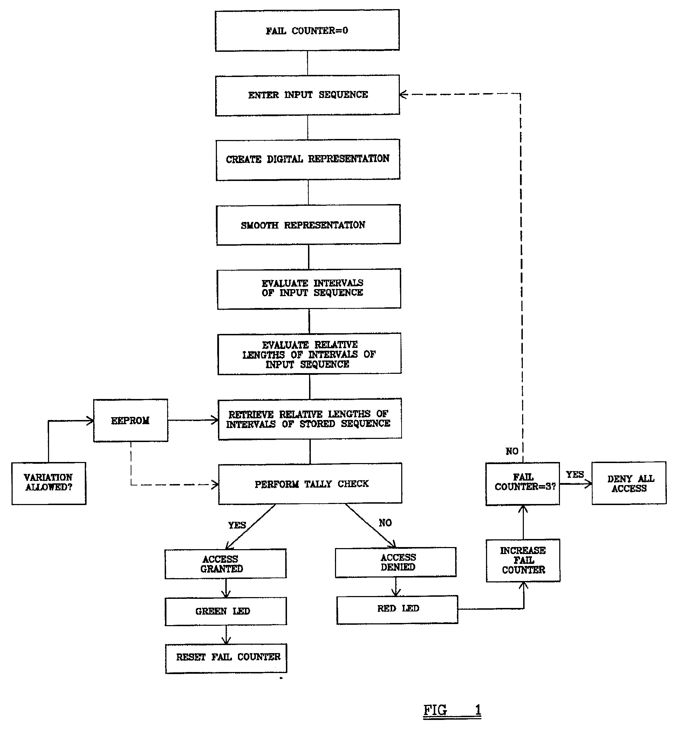

Referring first to Figure 1, this shows a series of steps that are taken in the performance of the first aspect of the present invention.

First of all, it should be understood that the method shown can be used in conjunction with a wide variety of devices although, for the sake of convenience, Figure 1 will be described on the basis that the access control method is used in conjunction with an electronic device such as a Personal Digital Assistant (PDA).

With the PDA on, an input sequence is entered into the PDA by a tactile operation such as tapping an appropriate part of the PDA in a known rhythm. As will be understood, this is very simple for a potential user to do, with the user being able to choose a personally relevant rhythm such as a favourite music snippet and the like.

To receive the sequence, the PDA may be provided with a touch-sensitive pad such as those that are used with finger-trace mouse emulators, for example, or may be provided with a simple on/off switch that converts the tactile sequence into an electrical signal trace.

At this point, it should be understood that a keyboard is not required for implementation of this invention: in contrast, as the principal aspect of the access code is the rhythm of the input sequence, a single switch may suffice, thus allowing a substantially single-finger mode of operation.

Alternatively, the sequence may be entered by breaking a light beam in a particular rhythm, or by generating an appropriate series of sounds which are detectable with suitable hardware.

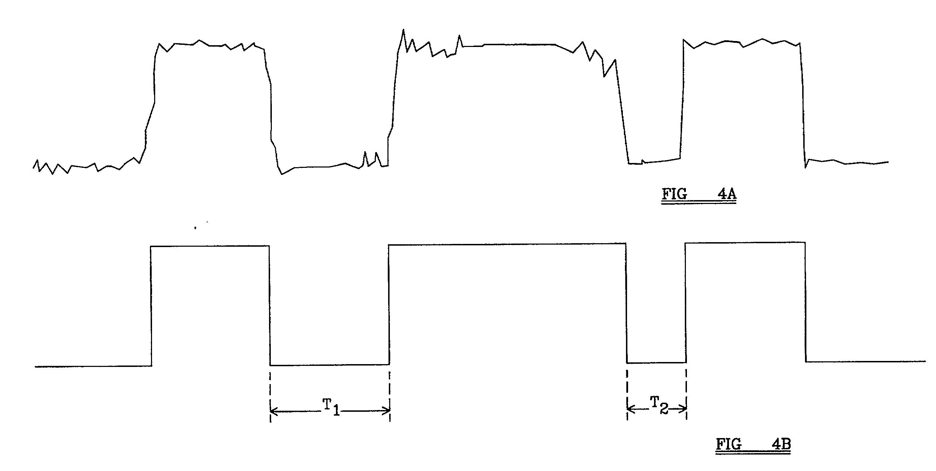

Once the input sequence has been tapped in, embedded electrical circuitry creates a digital representation of the thus-entered sequence, such as is shown in Figure 4A, for example. In order to facilitate subsequent analysis of the representation, Digital Signal Processing (DSP), such as smoothing or de-bouncing, may then be applied, in generally conventional manner, giving rise to a smoothed digital trace such as that shown in Figure 4B.

Broadly speaking, embedded software then evaluates the intervals of the input sequence, such that a mathematical representation of the sequence rhythm is obtained. In the simple example shown in Figure 4B, interval T₁ is twice as long as interval T₂, with the interval ratio thus being 2:1. It will of course be understood that with longer sequences, more complex ratios will be involved.

The thus-evaluated relative lengths of the intervals of the input sequence are then compared with the relative lengths of the intervals of a sequence stored in a non-volatile memory such as an EEPROM. As will be understood, the erasable and programmable nature of an EEPROM allows the stored sequence to be varied, thus allowing an authorised user to change the accepted access code as and when necessary.

In more detail, the operation is as follows.

Specifically, the embedded software evaluates the intervals between the starts of the signals of the input sequence, such that a representation (e.g. mathematical) of the sequence is obtained. In a preferred implementation, the sequence is represented by a sequence of numbers, the numbers corresponding to the delays between the various "key-press" events, as key-press events correspond with the starts of the input signals. As a sequence may be entered at different speeds (i.e. in different rhythms), and yet still be the same basic sequence, some implementations (e.g. software) may then proceed to transform these numbers into a representation of the delays between key-presses compared to the overall length of the pattern: thus, the delays between each key-press are expressed as a percentage of the overall pattern length.

The end of the input sequence may be detected by appropriate software, such as, for example, where no contact has been made with the input device for a predetermined period.

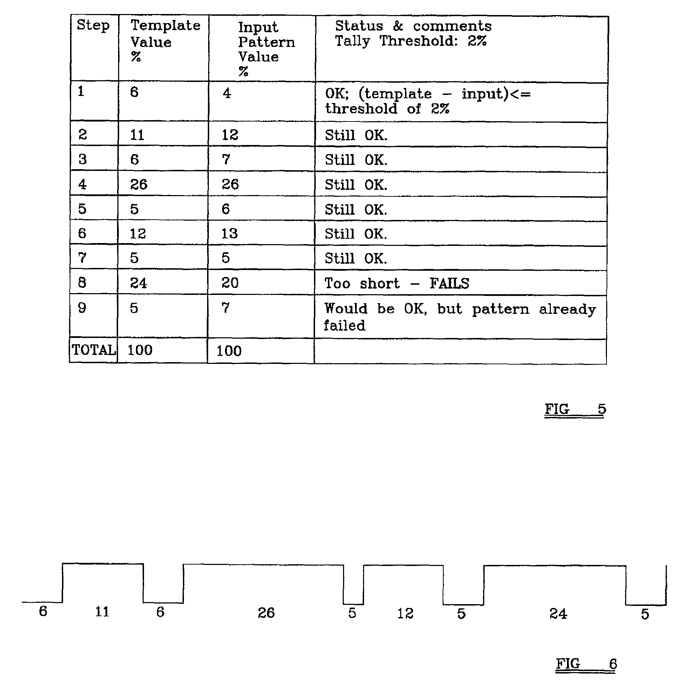

The subsequent tally/matching process consists of comparing the input sequence with a stored sequence or predefined template. As shown in Figure 5, a sequence can be expressed as a series of values - in this case 6, 11, 6, 26, 5,12, 5, 24 and 5. These values are numerical representations of the intervals between the starts of the sequence signals, and thus constitute an actual or relative image of the sequence rhythm. As the input pattern will rarely - if ever - be exactly the same as the template, a tally threshold may be set, which can be increased to make matching more likely, and hence decrease the level of security, or decreased to make matching more difficult, and hence increase the level of security. Input patterns that are close enough to the template will pass, whilst those having even a single discrepancy will not.

For increased security, the intervals between the end of a given signal and the start of the next signal may - in addition or as an alternative - be taken into account. Thus, the length of time that the potential user keeps his/her finger in contact with the switch, for example, also forms part of the input sequence. This increases the difficulty for an unauthorised user to "learn" (such as by listening to) the access code of another person, as memorising the audible "taps" will not suffice. These additional intervals are illustrated in Figure 6.

The template (stored sequence) may itself be established by a user repeatedly entering a desired sequence of signals. The tally threshold (i.e. security level) may then automatically be adjusted to take into account the variation observed during the "training" process, either on a per-pulse basis, or for the whole pattern. Thus, where the user enters the same sequence say, three times in succession, with very little variance occurring, a high tally threshold may be set, as it is fair to assume that the user, on a subsequent occasion, will be able to replicate the stored sequence fairly accurately.

Looking next at the matching process in more detail, this, in essence, involves taking each number of the input pattern in turn, and comparing it with the corresponding template value. If the values differ by more than the permitted threshold, the input sequence is rejected. In addition, the input sequence may be rejected where there exist more or less numbers in the input sequence than in the stored sequence. The sample code set out below illustrates one possible algorithm that could be used to implement the matching process.

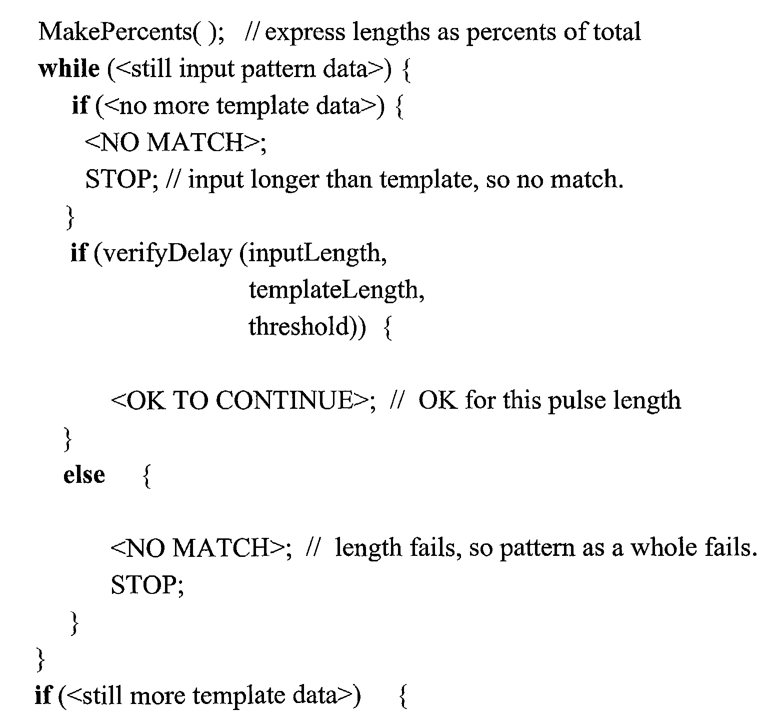

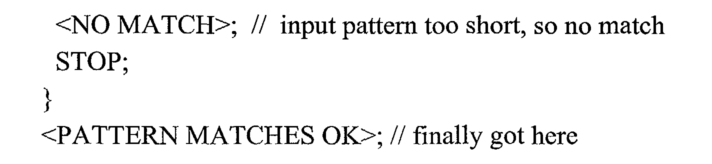

The degree of similarity required for access to be allowed (the tally threshold) can be changed by effecting a suitable modification to the data contained within the EEPROM. Thus, where a high level of security is needed (e.g. in an automated cash dispenser) a very close match will be required in order for access to be granted. On the other hand, where security is of less importance, or where input sequences are likely to vary (such as on an outdoor access control panel, where users' hands may be cold), a greater difference may be accommodated.

Where access is granted, this may be shown by the illumination of a green LED, for example, with a red LED being illuminated where the required match is not found.

In the latter case, a fail counter (initially set at 0) is increased by one, with the series of steps then being recommenced to provide the potential user with a second opportunity to access the device.

As shown in Figure 1, when the fail counter attains a pre-set value of (eg.) three, no further attempts are permitted, with all access thereafter being denied.

In the event, however, that access to the device is granted, the fail counter is reset to zero.

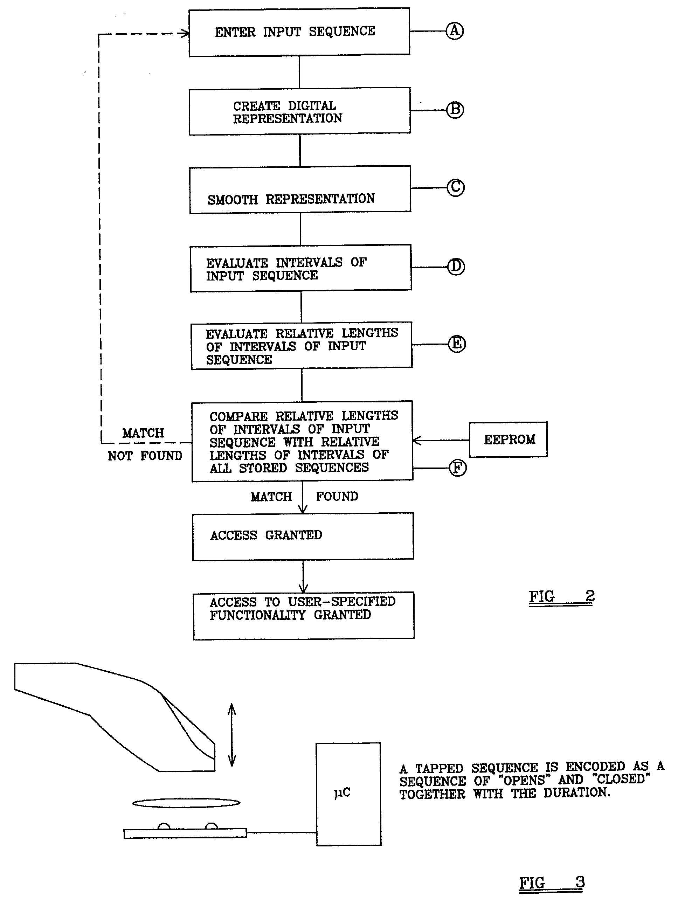

Figure 2 shows a step-wise implementation of the second aspect of the present invention.

Steps A, B, C, D and E correspond to the first five steps described in relation to Figure 1, although step F differs in that the relative lengths of the intervals of the input sequence are compared with the relative lengths of the intervals of a plurality of sequences stored within the EEPROM.

Where a match is found with one of the stored relative lengths, indicating that the user is authorised to access the device, access is granted, with additional access being given to user-specific functionality of the device, in a manner analogous to the use of individual user ID's and passwords in network applications, for example.

Where a match is not found, however, the input process is restarted, optionally with a fail counter increment such as is shown in Figure 1.

It will be understood that the computational steps could conceivably be effected in a variety of ways, although the applicants envisage that, for reasons of space, cost and ease of use, a relatively simply 8-bit microprocessor would be particularly suitable. Such a microprocessor could also perform the DSP steps without difficulty in addition to controlling any changes to the EEPROM such as the level of security and the stored sequence, for example.

In the present specification "comprises" means "includes or consists of" and "comprising" means "including or consisting of'.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A method of controlling access to a device by the use of an access code comprising a sequence of signals, access to the device being denied when the relative lengths of the intervals between the starts of the signals of an entered input sequence do not tally with the relative lengths of the intervals between the starts of the signals of a stored sequence.

2. A method according to Claim 1 wherein a digital representation of the input sequence is produced and wherein the digital representation is subjected to a processing operation such as smoothing, prior to the tally check being performed.

3. A method according to Claim 2 wherein the processing operation involves the use of a de-bouncing algorithm.

4. A method according to Claim 1, Claim 2 or Claim 3 wherein the variation between the input and stored relative lengths needed for access to be denied is variable, whereby different levels of access control may be provided.

5. A method according to any one of the preceding claims wherein the stored sequence is contained within a programmable non-volatile memory device.

6. A method according to Claim 5 wherein the memory device is an EEPROM.

7. A method according to any one of the preceding claims wherein the input sequence is entered using a single input element.

8. A method according to Claim 7 wherein the input element is an electrically, optically or sonically operable switch.

9. A method according to Claim 7 or Claim 8 wherein the input sequence is entered using a substantially single-finger operation.

10. A method according to any one of the preceding claims wherein access is denied when the rhythm of the input sequence does not match the rhythm of the stored sequence.

11. A method of identifying a user of an electronic device by the use of an access code comprising a sequence of signals, the user being identified where a match is found between the relative or actual lengths of the intervals between the starts of the signals of an entered input sequence and the relative or actual lengths of the intervals between the starts of the signals of one of a plurality of stored user sequences.

12. A method according to Claim 11 wherein the existence of a match allows the thus-identified user to access user-specific functionality of the device.

13. A method of controlling access to a device by the use of an access code comprising a sequence of signals, access to the device being denied when the relative lengths of the intervals between signal-on and signal-off events of an entered input sequence do not tally with the relative lengths of the intervals between signal-on and signal-off events of a stored sequence.

14. A method of identifying a user of an electronic device by the use of an access code comprising a sequence of signals, the user being identified where a match is found between the relative or actual lengths of the intervals between signal-on and signal-off events of an entered input sequence and the relative or actual lengths of the intervals between signal-on and signal-off events of one of a plurality of stored user sequences.
